# EUROPEAN PATENT APPLICATION

(11) **EP 4 474 366 A1**
(43) Date of publication of application: **11.12.2024**
(21) Application number: 24154022.8
(22) Date of filing: 25.01.2024
(51) Int. Cl.: C04B 35/573, C04B 35/626

(54) **COMPOSITE MATERIAL**

(30) Priority: 03.02.2023 JP 2023015171; 03.02.2023 JP 2023015172
(71) Applicant: Toto Ltd., Fukuoka 802-8601 (JP)
(72) Inventor: Watanabe, Naoki, Kitakyushu-shi, 802-8601 (JP); Nishimura, Hikaru, Kitakyushu-shi, 802-8601 (JP); Tanaka, Takahiro, Kitakyushu-shi, 802-8601 (JP); Tsuboi, Fumio, Kitakyushu-shi, 802-8601 (JP)
(74) Representative: Bandpay & Greuter

(57) **Abstract**

At least a portion of the cross section (SA) of a composite material (10) includes: a first region (S1) containing silicon; and a second region (S2) containing silicon carbide that surrounds the entire outer circumference of the first region (S1) and that is a continuous single region without grain boundaries interposed.

## Description

### BACKGROUND OF THE INVENTION

### Field of the Invention

The present invention relates to a composite material containing silicon and silicon carbide.

### Description of the Related Art

Composite materials containing silicon and silicon carbide are referred to also as "SiSiC" and known as materials having high corrosion resistance, heat resistance, and the like. As described in Japanese Patent Laid-Open No. 2001-348288, such a composite material can be obtained, for example, by reaction sintering of a molded body composed of carbon in powder form and silicon carbide while impregnated with molten silicon.

The composite material has high rigidity, while being relatively lightweight, and further has high thermal conductivity. Thus, it is expected to be applied to various fields including semiconductor manufacturing equipment and the like.

### SUMMARY OF THE INVENTION

As shown in the drawings or the like of Japanese Patent Laid-Open No. 2001-348288, the cross section when cutting a composite material containing silicon and silicon carbide has a plurality of regions as the cross section of silicon carbide particles and regions containing silicon disposed in the form of a matrix filling between them. In conventional composite materials, silicon carbide particles contained in raw material before firing are known to hardly grow during the firing process. Accordingly, the regions of silicon carbide particles appearing in the cross section remain divided into a plurality of regions, while generally maintaining the original size, and there are relatively wide gaps between them. As a result, the area of silicon filling the gaps between silicon carbide particles is relatively large in the cross section.

The silicon portion of the composite material has lower strength than the silicon carbide portion. Therefore, there has been a tendency for excessive abrasion during processing due to the relatively large area of silicon in the cross section in conventional composite materials, making it difficult to perform precise processing such as that required in semiconductor manufacturing equipment, which has been a problem.

The present invention has been devised in view of the problem as described above, and an object thereof is to provide a composite material that enables precision processing.

As an aspect to solve the aforementioned problem, the composite material according to the present invention is a composite material comprising silicon and silicon carbide, wherein at least a portion of the cross section of the composite material cut along a plane comprises a first region comprising the silicon and a second region comprising the silicon carbide that surrounds the entire outer circumference of the first region and that is a continuous single region without grain boundaries interposed.

In the cross section of the composite material with such a configuration, the second region comprising the silicon carbide is disposed so as to surround the entire circumference of the first region comprising the silicon, in at least a portion of the cross section. Further, the second region that surrounds the first region is a continuous single region without grain boundaries interposed. In the composite material with such a configuration, since the first region comprising the silicon is finely divided by the second region that surrounds them, the proportion of the first region in the cross section is relatively small. Since the proportion of the first region with low strength is small, and "excessive scraping" during processing is suppressed, more precision processing on the composite material is enabled as compared with conventional materials.

Further, the second region that surrounds the first region (silicon carbide) is not a collection of a plurality of particles but is a continuous single region without grain boundaries interposed. Since silicon carbide with a relatively high strength is continuous, "excessive scraping" during processing is further suppressed. Furthermore, it is possible to obtain the effect that particles are less likely to fall off during processing.

The "continuous single region" above means to be one continuously without grain boundaries interposed and does not mean, for example, that the concentration of various components is uniform throughout the region.

In the composite material according to the present invention, it is also preferable that the area proportion of the second region in the cross section is 70% or more. When the second region with a relatively high strength is 70% or more, the processability of the composite material can be sufficiently enhanced.

Further, it is also preferable in the composite material according to the present invention that the area proportion of the second region in the cross section is 80% or more. When the second region with a relatively high strength is 80% or more, the processability of the composite material can be further enhanced.

As another aspect to solve the aforementioned problem, the composite material according to the present invention is a composite material comprising silicon and silicon carbide, wherein a cross section cut along a plane of the composite material comprises a plurality of first regions comprising the silicon and a second region comprising the silicon carbide. When a graph is plotted that shows the relationship between value L1, which is individually calculated for each of the plurality of first regions contained in the cross section as a length of the minor axis of the maximum ellipse that can be disposed inside the first region, and frequency, the value L1 corresponding to a first peak with the highest frequency in the graph is 1.5 µm or less.

In the cross section of the composite material with such a configuration, when a graph is plotted that shows the distribution of the value L1 which is individually calculated for each first region, the value L1 corresponding to the first peak with the highest frequency in the graph is 1.5 µm or less. That is, most of the plurality of first regions appearing in the cross section of the composite material are each distributed as a small region that can only encompass an ellipse with a minor axis of 1.5 µm or less. As a result, the proportion of the first region in the cross section is relatively small. Since the proportion of the first regions with low strength is small, and "excessive scraping" during processing is suppressed, more precision processing of the composite material is enabled as compared with before.

Further, in the composite material according to the present invention, it is preferable that a second peak with the second highest frequency is present in the graph, in addition to the first peak. According to the experiments performed by the inventors, it has been found that the second peak started appearing in the graph showing the relationship between value L1 and frequency by adjusting the conditions during manufacturing and reducing the first regions comprising the silicon as compared to conventional materials. The processability can be sufficiently improved, as compared with before, by reducing each first region to the extent that the second peak appears.

In the composite material according to the present invention, it is also preferable that the value L1 corresponding to the second peak is more than 1.5 µm and 2.5 µm or less. When the first regions are distributed in the cross section so that the second peak appears when the value L1 is in the range of 1.5 µm to 2.5 µm or less, the processability of the composite material can be remarkably improved.

In the composite material according to the present invention, it is also preferable that when a graph is plotted that shows the relationship between value L2, which is individually calculated for each of the plurality of first regions contained in the cross section as a length of the major axis of the maximum ellipse that can be disposed inside the first region, and frequency, the value L2 corresponding to the first peak with the highest frequency in the graph is 1.5 µm or more and 3.0 µm or less.

For the sample of the composite material, the distribution of the value L2 that is the length of the major axis of the maximum ellipse that can be disposed inside the first regions was also measured, as a result of which new findings have been obtained also for the distribution. Specifically, it was confirmed that the value L2 corresponding to the first peak with the highest frequency was within the range of 1.5 µm to 3.0 µm in the graph showing the distribution of the value L2 individually calculated for each first region, the processability of the composite material could be improved.

As another aspect to solve the aforementioned problem, the composite material according to the present invention is a composite material comprising silicon and silicon carbide, wherein the cross section of the composite material cut along a plane comprises a plurality of first regions comprising the silicon and a second region comprising the silicon carbide. When a graph is plotted that shows the relationship between value L2, which is individually calculated for each of the plurality of first regions contained in the cross section as a length of the major axis of the maximum ellipse that can be disposed inside the first region, and frequency, the value L2 corresponding to a first peak with the highest frequency in the graph is 1.5 µm or more and 3.0 µm or less.

In the cross section of the composite material with such a configuration, when a graph is plotted that shows a distribution of the value L2 individually calculated for each first region, the value L2 corresponding to the first peak with the highest frequency falls within the range of 1.5 µm or more and 3.0 µm or less in the graph. That is, most of the plurality of first regions appearing in the cross section of the composite material distribute as small regions so as to satisfy the aforementioned conditions, and therefore the proportion of the first regions in the cross section is relatively small. Since the proportion of the first regions where the strength is low is small, and "excessive scraping" during processing is suppressed, more precision processing of the composite material is enabled as compared with before.

The present invention can provide a composite material capable of precision processing.

### BRIEF DESCRIPTION OF THE DRAWINGS

Figure 1 is a diagram showing the cross section of the composite material according to the embodiment;
Figure 2A includes diagrams showing the cross section of the composite material according to the embodiment;
Figure 2B includes diagrams showing the cross section of the composite material according to the embodiment;
Figure 3A includes diagrams showing the cross section of the composite material according to a comparative example;
Figure 3B includes diagrams showing the cross section of the composite material according to a comparative example;
Figure 4 is a table showing the evaluation results for composite materials;
Figure 5 is a diagram showing the cross section of the composite material according to the embodiment;
Figure 6A includes diagrams for describing the calculation method for L1 and L2;
Figure 6B includes diagrams for describing the calculation method for L1 and L2;
Figure 7 is a graph showing the relationship between value L1 and frequency in the cross section of the composite material according to the embodiment;
Figure 8 is a graph showing the relationship between value L2 and frequency in the cross section of the composite material according to the embodiment;
Figure 9A includes diagrams showing the cross section of the composite material according to the comparative example;
Figure 9B includes diagrams showing the cross section of the composite material according to the comparative example;
Figure 10 is a graph showing the relationship between value L1 and frequency in the cross section of the composite material according to the comparative example;
Figure 11 is a graph showing the relationship between value of L2 and frequency in the cross section of the composite material according to the comparative example; and
Figure 12 is a table showing the evaluation results for composite materials.

### DETAILED DESCRIPTION OF THE PREFERRED EMBODIMENTS

Hereinafter, the embodiment will be described with reference to attached drawings. In order to facilitate understanding of the description, the same components in each drawing are denoted by the same reference numerals as much as possible, and redundant description will be omitted.

A composite material 10 according to the embodiment is a solid material containing silicon and silicon carbide, which may also refer to a so-called "SiSiC", for example. The composite material 10 is used, for example, as a material for parts constituting semiconductor manufacturing equipment but specific applications or final shapes thereof are not specifically limited.

As will be described later, the composite material 10 is obtained by reaction sintering of a molded body composed of carbon in powder form and silicon carbide while impregnated with molten silicon. In this regard, it is similar to conventional SiSiC. However, the composite material 10 according to the embodiment differs from conventional SiSiC in the shape and distribution of each region that appears in the cross section when cut.

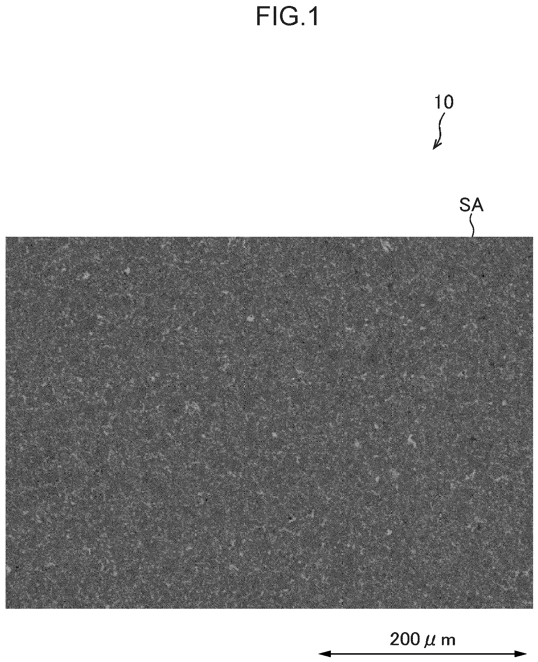

The image shown in Figure 1 is an image obtained by observing a cross section SA appearing when the composite material 10 is cut along a plane with a scanning electron microscope (SEM). The area of the cross section SA is 500 µm × 350 µm, and the magnification is 250 times. Each of the white regions scattered in the cross section SA has been confirmed to be a region mainly containing silicon (Si). This region will be referred to also as "first region S1" below. In the cross section SA, the black region in the circumference of the first region S1 has been confirmed to be a region mainly containing silicon carbide (SiC). This region will be referred to also as "second region S2" below.

The first region S1 may be a region in which silicon accounts for 100% or may be a region containing components other than silicon. Likewise, the second region S2 may be a region in which silicon carbide accounts for 100% or may be a region containing components other than silicon carbide.

It was confirmed that regions that do not fall under any of the first region S1 and the second region S2 are also scattered in the cross section SA. Examples of such a region include a region containing carbon particles that are one of the raw materials when molding.

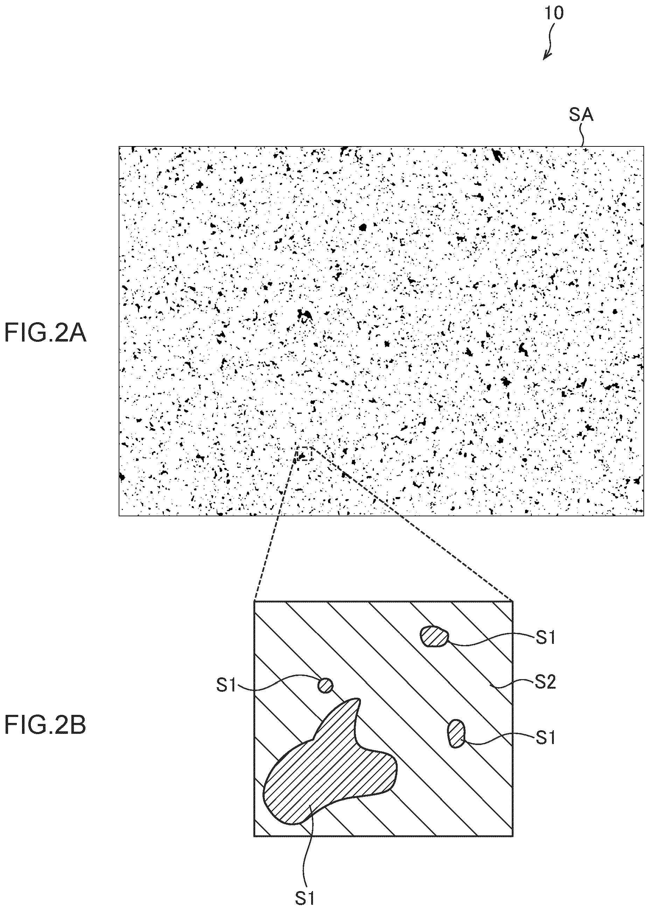

Figure 2A and Figure 2B shows a distribution of the second region S2 in the cross section SA. Figure 2A shows each first region S1 as a black region by applying an image processing (binarization) to the cross section SA of Figure 1. Figure 2B is a schematic redrawn enlargement of a part of Figure 2A.

As shown in Figure 2A and Figure 2B, a plurality of first regions S1 are present in the cross section SA of the composite material 10, and these are spaced apart from each other and substantially uniformly distributed. Most of the first regions S1 are surrounded from the outside over the entire circumferences thereof by the second region S2. Further, in at least the range shown in Figure 2B of the cross section SA, the second region S2 is observed as a continuous single region without grain boundaries interposed. That is, in the image obtained by observing at a magnification of 250 times or less as shown in Figure 1, the presence of grain boundaries that divide this into multiple portions is not observed in the second region S2 shown in Figure 2B.

As will be described later, granulated powder with higher sphericity and improved fluidity than before is used in the embodiment as a raw material when manufacturing the composite material 10. It is considered that, as a result of silicon carbide, carbon, and the like in the raw materials being dispersed more uniformly than before, the grain growth of silicon carbide occurs, and a continuous second region S2 is formed as in Figure 2B.

The second region S2, which surrounds the first region S1 from the outside over the entire circumference thereof, is a continuous single region without grain boundaries interposed, as described above, but it is not necessarily a continuous single region in the entirety of the cross section SA shown Figure 1. For example, a plurality of continuous second regions S2 without grain boundaries interposed are present in the cross section SA shown in Figure 1, and the plurality of second regions S2 may be configured to be adjacent to each other with grain boundaries interposed therebetween. In this case, the first region S1 with the entire circumference thereof surrounded may be present inside at least one of the second regions S2.

The second region S2 may be observed as a "continuous single region without grain boundaries interposed" at least when observed with a scanning electron microscope at a magnification of 250 times or less. When the second region S2 that surrounds the entire circumference of the first region S1 is observed at a magnification of more than 250 times in detail, grain boundaries dividing the second region S2 and the corresponding boundaries may be observed.

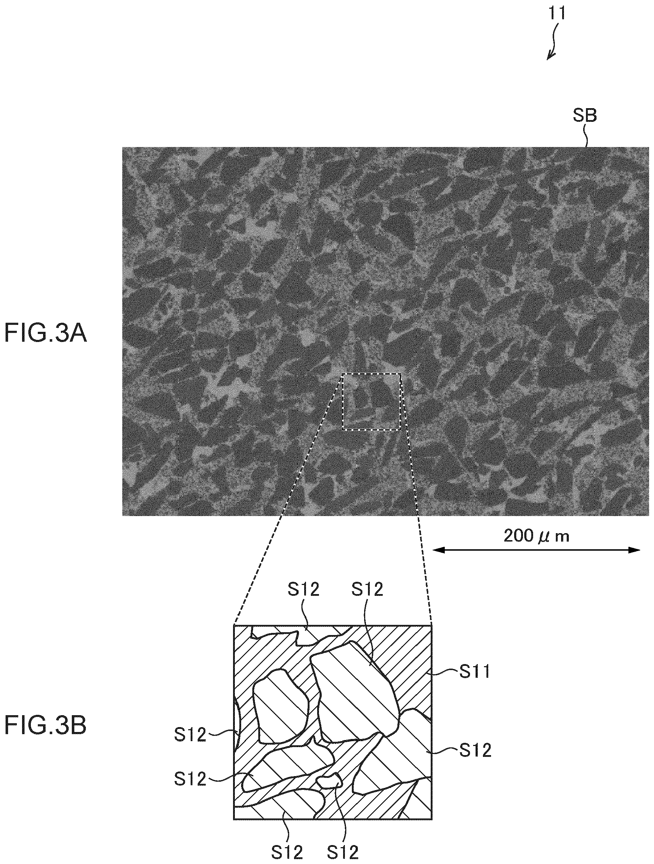

For comparison with the composite material 10 with the aforementioned configuration, a composite material 11 according to the comparative example will be described. The image of Figure 3A is an image obtained by observing a cross section SB with a scanning electron microscope (SEM), which appears by cutting a composite material 11 according to the comparative example along a plane. In the same manner as in Figure 1, the area of the cross section SB is 500 µm × 350 µm at a magnification of 250 times. Figure 3B is a schematic redrawn enlargement of a part of Figure 3A.

In Figure 3B, the region denoted by a reference numeral "S11" is a region mainly containing silicon like the first region S1 of Figure 2B. In Figure 3B, the region denoted by a reference numeral "S12" is a region mainly containing silicon carbide like the second region S2 of Figure 2B.

In the comparative example of Figure 3A and Figure 3B, the regions S12 (silicon carbide) are present as relatively large particles, and a plurality of such particles are present in the cross section SB. Although some of the plurality of regions S12 are in contact with each other, the regions S12 are each separated by a grain boundary. Further, since the regions S12 are relatively large, the regions S11 (silicon) as gaps are each relatively wide and distributed in the form of matrix in the cross section SB. In a part of the cross section SB, the region S11 with its entire circumference surrounded by the region S12 can be present, but the surrounding region S12 is not a single region. That is, there may be a portion where the plurality of regions S12 (silicon carbide) that are adjacent to each other with grain boundaries interposed therebetween are disposed so as to surround the entire circumferences of the regions S11 (silicon).

As is obvious from the comparison with the comparative example of Figure 3A and Figure 3B, the second region S2 is a continuous single region without grain boundaries interposed in the composite material 10 of the embodiment shown in Figure 2A and Figure 2B, and the entire circumferences thereof are surrounded by the second region S2 thereinside, which differs from the comparative example.

In the composite material 10 with such a configuration, since the first regions S1 containing silicon are finely separated by the second region S2 that surrounds them, the proportion of the first region S1 in the cross section SA is relatively small. As generally known, silicon contained in the first regions S1 has low strength as compared with silicon carbide contained in the second region S2. In the composite material 10, since the proportion of the first regions S1 with low strength is small, and "excessive scraping" during processing is suppressed, precision processing can be performed as compared with before.

Further, the second region S2 (silicon carbide) that surrounds the first regions S1 is not a collection of multiple particles but is a continuous single region without grain boundaries interposed. When silicon carbide with a relatively high strength is continuous, "excessive scraping" during processing is further suppressed. Furthermore, it is possible to obtain the effect that particles are less likely to fall off during processing.

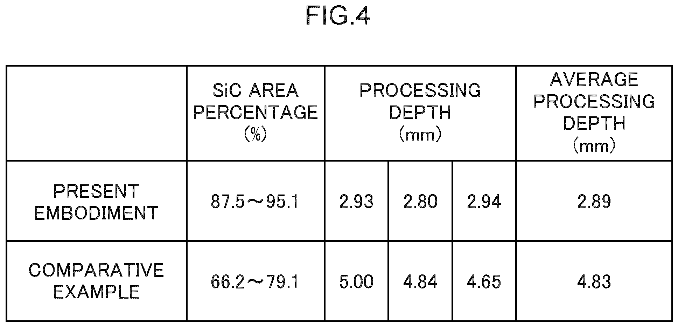

Figure 4 shows the results of an experiment in which the processability of the composite material 10 according to the embodiment is compared with the processability of the composite material 11 according to the comparative example.

The "SiC area percentages" in the table of Figure 4 shows the area proportions of the regions containing SiC (such as the first regions S1 and the regions S12) in the cross section of each sample as percentages. In Figure 4, SiC area percentages of the embodiment and the comparative example are each measured in a plurality of cross sections in one sample, and values obtained are shown as areas. The image of each cross section as a measurement target is an image with an area of 500 µm × 350 µm at a magnification of 250 times, as in Figure 1. The area of the cross section for measuring the SiC area percentage may be an area wider than above.

In the composite material 10 according to the embodiment, the SiC area percentage was measured in the range of 87.5% to 95.1%. In the composite material 11 according to the comparative example, the SiC area percentage was measured in the range of 66.2% to 79.1%.

In measuring the SiC area percentage, only the second region S2 (or the regions S12) is extracted by applying binarization using an image analysis software to the images of Figure 1, Figure 3A, and Figure 3B obtained by observation with a scanning electron microscope, to produce an image as in Figure 2A and Figure 2B. Thereafter, using the function of the image analysis software, the total area proportion of the second region S2 (or the regions S12), that is, the SiC area percentage was calculated.

The "processing depth" in the table of Figure 4 shows, after the surface of each sample is subjected to sandblasting in the same conditions, the measurement results of measuring the depth of the recesses formed on the surface with a gauge in units of mm. In the example of Figure 4, three portions in one sample of each of the embodiment and the comparative example are subjected to sandblasting, and the processing depth of each portion is measured. The "average processing depth" shown in Figure 4 is the average of the three processing depths. In the composite material 10 according to the embodiment, the average processing depth measured was 2.89 mm. In the composite material 11 according to the comparative example, the average processing depth measured was 4.83 mm. In this way, it was confirmed that the composite material 10 according to the embodiment had an average processing depth that is suppressed to smaller as compared with the comparative example and was a material that is easier to perform precision processing.

The inventors produced a plurality of types of composite materials 10 while changing the manufacturing conditions separately from the embodiment shown in Figure 1, and each sample was subjected to calculation of the SiC area percentage and measurement of the average processing depth. According to the measurement, it was confirmed that, when the area proportion of the second region S2 in the cross section SA is 70% or more, the average processing depth was reduced, and the processability was sufficiently improved, as compared with before. It was confirmed that, as the area proportion of the second region S2 in the cross section SA increased, the average processing depth was reduced more. When the proportion is 80% or more, the processability was improved remarkably as compared with before. When the proportion is 90% or more (more preferably 95% or more), it was confirmed that the processability was further improved to the extent that fine and highly accurate structures required for semiconductor manufacturing equipment and the like can be formed extremely easily.

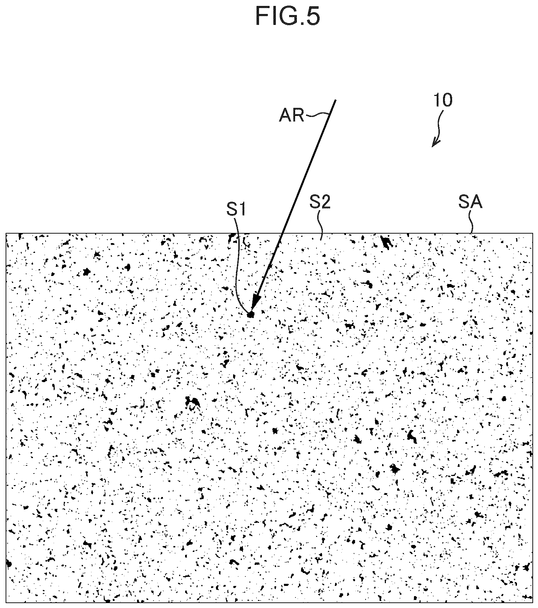

Figure 5 is a diagram showing distribution of the second region S2 in the cross section SA, which is the same image with reference numerals "S1" and "S2" as in Figure 2A. In Figure 5, the white regions in the circumferences of the first regions S1 generally coincide with the second region S2.

As described above, in the image obtained by observation at a magnification of 250 times or less, as in Figure 1, the second region S2 is observed as a continuous single region without grain boundaries interposed. However, when each of the first regions S1 is distributed as a small region so as to satisfy the conditions as described below, grain boundaries dividing the second region S2 into multiple portions may be observed in the image obtained at a magnification of 250 times or less as in Figure 1.

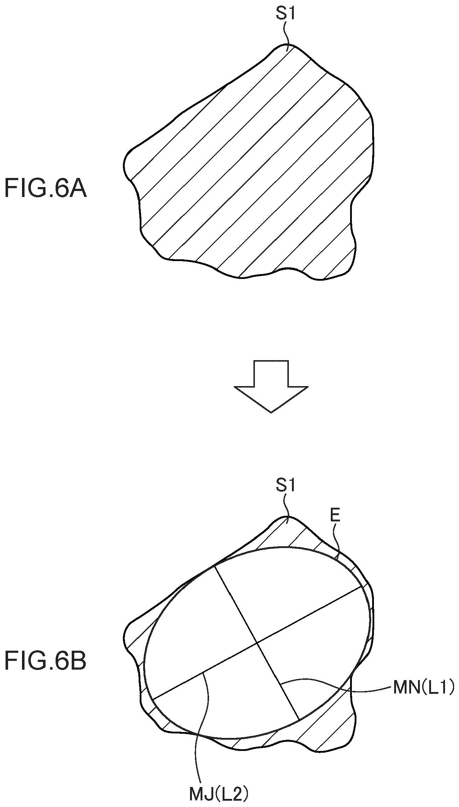

One of the plurality of first regions S1 in the cross section SA is shown in Figure 6A, and only the first region S1 shown by the arrow AR in Figure 5 is extracted and schematically drawn. A diagram in which an inscribed ellipse E corresponding to the first region S1 is superimposed on the same first region S1 as in Figure 6A is shown in Figure 6B. The "inscribed ellipse E" is the maximum ellipse that can be disposed fit entirely inside the first region S1. The length of each of the major axis MJ and the minor axis MN of the inscribed ellipse E and the ratio thereof can be freely set within a range in which the inscribed ellipse E does not protrude from the first region S1. The inscribed ellipse E can also be said to be an ellipse obtained by adjusting the major axis MJ and the minor axis MN so that its area is maximized within a range that does not protrude from the first region S1. The shape of the inscribed ellipse E is uniquely determined corresponding to the shape of each first region S1.

The length of the minor axis MN of the inscribed ellipse E will also be referred to as "L1" below. Furthermore, the length of the major axis MJ of the inscribed ellipse E will also be referred to as "L2" below.

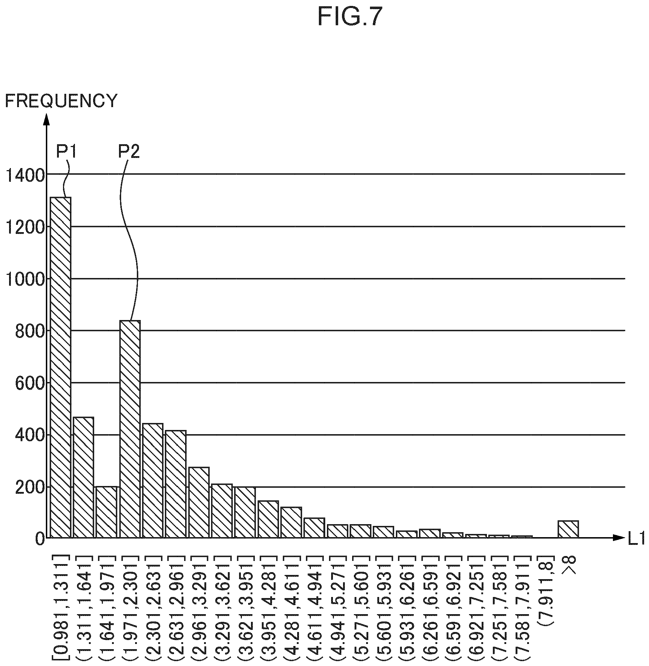

When the length L1 of the minor axis MN of the corresponding inscribed ellipse E is individually calculated for each of the plurality of first regions S1 included in the cross section SA in Figure 5, a graph showing the distribution of L1 can be plotted. Such a graph can be plotted, for example, as a histogram shown in Figure 7. The horizontal axis of the graph in Figure 7 represents "classes" that classify the value L1 into predetermined ranges. The unit of the numerical value is "µm". The vertical axis of the graph in Figure 7 represents, for each of the aforementioned classes, the "frequency" of the first region S1 to which L1 belongs to the class, that is, the frequency of L1 in the cross section SA.

The graph showing the relationship between L1 value and frequency may be plotted as a histogram as shown in Figure 7, but it may also be plotted as another graph. For example, a graph showing the frequency of L1 may be plotted as a continuous curve, such as a normal distribution graph.

As shown in Figure 7, when a graph showing the frequency of L1 is plotted for the cross section SA, two peaks P1 and P2 appear on the graph.

The peak P1 is the peak with the highest frequency in the graph of Figure 7. The peak P1 corresponds to the "first peak" in the graph of Figure 7. The value L1 corresponding to the peak P1 is approximately 1.15 µm. The "value L1 corresponding to the peak P1" is an arbitrary value within the range of the class to which the peak P1 belongs when the graph is plotted as a histogram as in the embodiment. For example, it can be set to the middle value of the range of the class to which the peak P1 belongs. In the case of the example of Figure 7, the peak P1 belongs to the class of 0.981 to 1.311, and therefore the value L1 corresponding to the peak P1 is (0.981 + 1.311)/2 = 1.146 µm.

The peak P2 is a peak with the second highest frequency in the graph of Figure 7. Peak P2 corresponds to the "second peak" in the graph of Figure 7. The value L1 corresponding to the peak P2 is about 2.14 µm. Since the "value L1 corresponding to the peak P2" is defined in the same manner as the "value L1 corresponding to the peak P1" described above, the description thereof is omitted. In the case of the example of Figure 7, the peak P2 belongs to the class of 1.971 to 2.301, and therefore the value L1 corresponding to the peak P2 is (1.971 + 2.301)/2 = 2.136 µm.

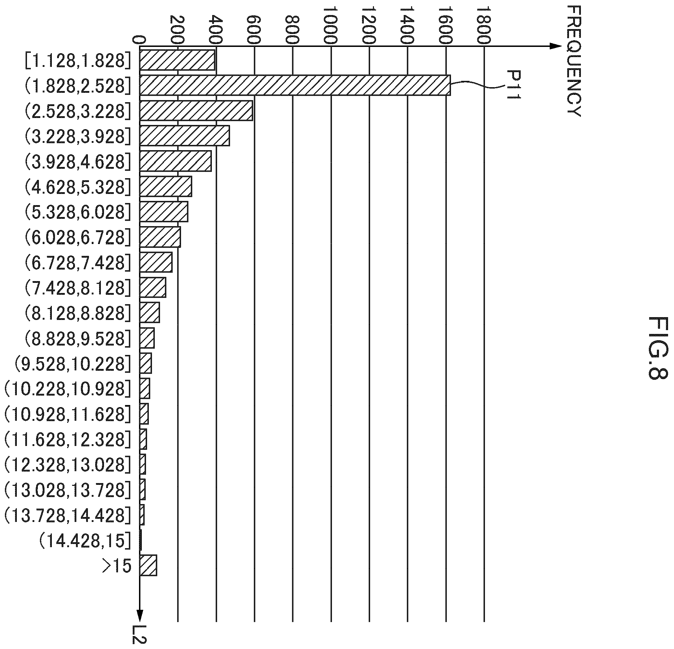

Similarly to above, the length L2 of the major axis MJ of the inscribed ellipse E corresponding to each of the plurality of first regions S1 contained in the cross section SA of Figure 5 is individually calculated, and a graph showing the distribution of L2 can be plotted. Such a graph can be plotted, for example, as the histogram shown in Figure 8. Since each of the horizontal axis and the vertical axis of the graph of Figure 8 are defined in the same manner as in Figure 7, the description thereof is omitted. The graph showing the distribution of L2 may also be plotted, for example, as a continuous curve like a normal distribution graph.

As shown in Figure 8, only a single peak P11 appears in the graph showing the frequency of L2. The peak P11 is the peak in the graph with the highest frequency. The peak P11 corresponds to the "first peak" in the graph of Figure 8. The value L2 corresponding to the peak P11 is about 2.18 µm. Since the "value L2 corresponding to the peak P11" is defined as the "value L1 corresponding to the peak P1" described above, the description thereof is omitted. In the case of the example of Figure 7, the peak P11 belongs to the class of 1.828 to 2.528, the value L2 corresponding to the peak P11 is (1.828 + 2.528)/2 = 2.178 µm.

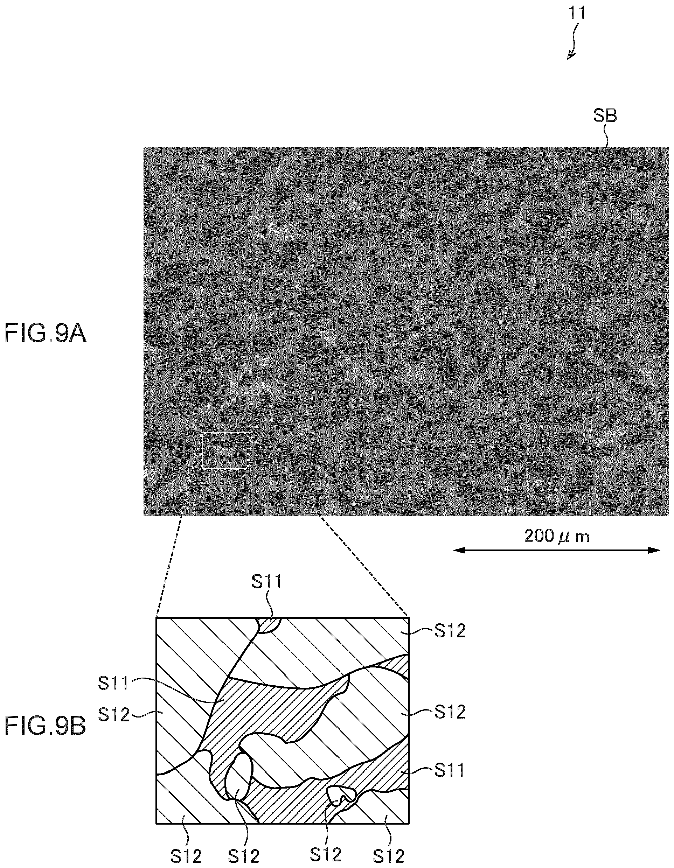

For comparison with the composite material 10 with the aforementioned configuration, the composite material 11 according to the comparative example will be described. The image of Figure 9A is an image obtained by observing the cross section SB that appears by cutting the composite material 11 according to the comparative example along a plane with a scanning electron microscope (SEM), which is the same image as in Figure 3A. Figure 9B is a schematic redrawn enlargement of a part of Figure 9A.

In Figure 9B, the region denoted by the reference numeral "S11" is a region mainly containing silicon like the first region S1 of Figure 5. In Figure 9B, the region denoted by the reference numeral "S12" is a region mainly containing silicon carbide like the second region S2 of Figure 5.

Also in this comparative example, an inscribed ellipse E is drawn for each of the regions S11, and the distribution L1, which is the length of the minor axis MN, and the distribution L2, which is the length of the major axis MJ, can be calculated.

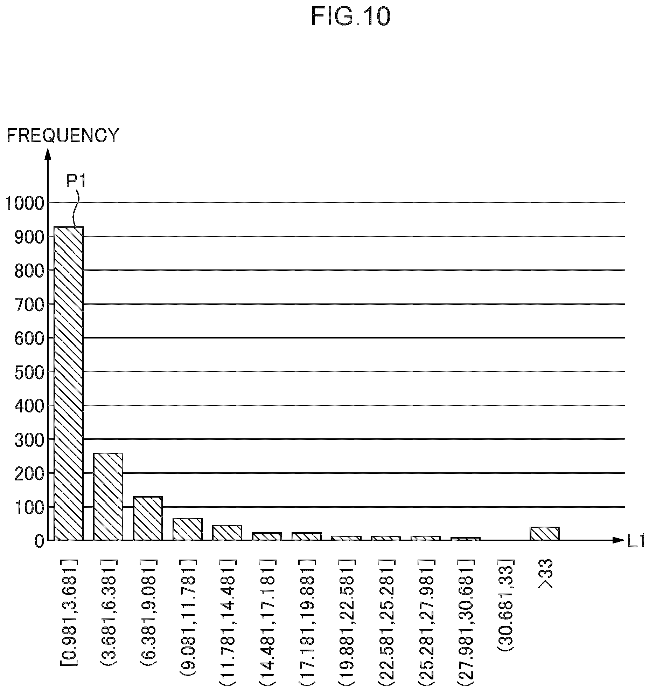

The graph shown in Figure 10 shows the distribution of L1 in the cross section SB (Figure 9A and Figure 9B) in the same manner as in Figure 7. As shown in Figure 10, only a single peak P1 appears in the graph showing the frequency of L1 in this comparative example. The peak P1 is the peak with the highest frequency in the graph of Figure 10 and corresponds to the "first peak" in the graph. The value L1 corresponding to the peak P1 is about 2.33 µm, which is a value larger than that in the embodiment (1.15 µm described above).

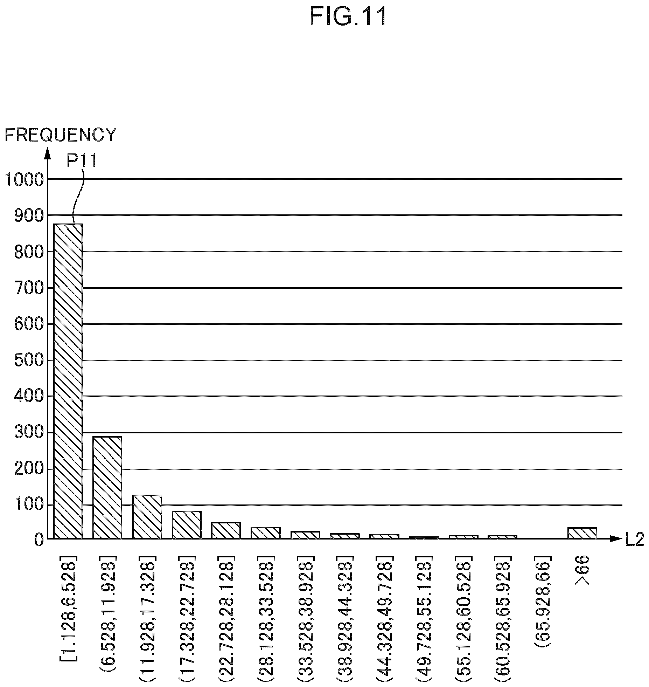

The graph shown in Figure 11 shows the distribution of L2 in the cross section SB (Figure 9A and Figure 9B) in the same manner as in Figure 8. As shown in Figure 11, only a single peak P11 appears also in the graph showing the frequency of L2 in this comparative example. The peak P11 is the peak with the highest frequency in the graph of Figure 11 and corresponds to the "first peak" in the graph. The value L2 corresponding to the peak P11 is about 3.83 µm, which is a value larger than that in the embodiment (2.18 µm described above).

As described above, each of the first regions S1 is reduced to the extent that the peak of the distribution of L1 calculated for each of the plurality of first regions S1 in the cross section SA in the composite material 10 of the embodiment is a value less than that in the comparative example.

Thus, in the composite material 10 with such a configuration, the proportion of the first region S1 in the cross section SA is relatively small. As generally known, silicon contained in the first region S1 has a lower strength than silicon carbide contained in the second region S2. Since the proportion of the first regions S1 with low strength is small in the composite material 10, and "excessive scraping" during processing is suppressed, precision processing is enabled as compared with before.

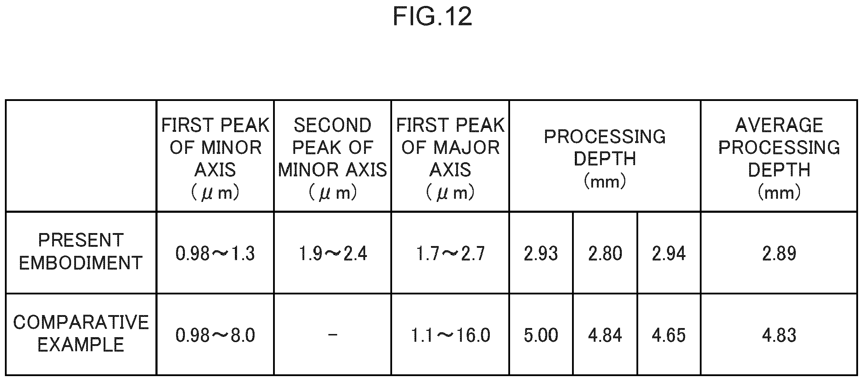

Figure 12 shows the results of an experiment comparing the processability of the composite material 10 according to the embodiment with the processability of the composite material 11 according to the comparative example.

The "first peak of the minor axis" in the table of Figure 12 means, when a graph is plotted that shows the distribution of L1 for the cross section of each sample, the value L1 corresponding to the first peak in the graph. That is, it means the value L1 corresponding to the peak P1 in Figure 7 and Figure 10. The unit is "µm". In Figure 12, the value L1 corresponding to the peak P1 is calculated for each of a plurality of cross sections in one sample, and each value obtained is shown as the "first peak of the minor axis" as a range. The image of each cross section as a measurement target is an image with an area of 500 µm × 350 µm at a magnification of 250 times, as in Figure 1. The area of the cross section used for measuring the distribution of L1 may be wider than above.

In the composite material 10 according to the embodiment, the first peak of the minor axis was calculated in the range of 0.98 µm to 1.3 µm. In the embodiment, it was confirmed that the first peak of the minor axis was always within the range of 1.5 µm or less regardless of how the cross section was taken. Meanwhile, in the composite material 11 according to the comparative example, the first peak of the minor axis was calculated in the range of 0.98 µm to 8.0 µm.

The "second peak of the minor axis" in the table of Figure 12 means, when a graph is plotted that shows the distribution of L1 for the cross section of a sample of the embodiment, the value L1 corresponding to the second peak in the graph. That is, it means the value L1 corresponding to the peak P2 in Figure 7. The unit is "µm". In Figure 12, the value L1 corresponding to the peak P2 is calculated for each of a plurality of cross sections in one sample, and each value obtained is shown as the "second peak of the minor axis" as a range. The image of each cross section as a measurement target is the same as the image used for calculating the first peak of the minor axis.

In the composite material 10 according to the embodiment, the second peak of the minor axis was calculated in the range of 1.9 µm to 2.4 µm. In the embodiment, it was confirmed that the second peak of the minor axis was always within the range of more than 1.5 µm and 2.5 µm or less regardless of how the cross section was taken. In the comparative example, since the second peak did not appear, the "second peak of the minor axis" was not calculated.

The "first peak of the major axis" in the table of Figure 12 means, when a graph is plotted that shows the distribution of L2 for the cross section of each sample, the value L2 corresponding to the first peak in the graph. That is, it means the value L2 corresponding to the peak P11 in Figure 8 and Figure 11. The unit is "µm". In Figure 12, the value L2 corresponding to the peak P11 is calculated for each of a plurality of cross sections in one sample, and each value obtained is shown as the "first peak of the major axis" as a range. The image of each cross section as a measurement target is the same as the image used for calculating the first peak of the minor axis or the like.

In the composite material 10 according to the embodiment, the first peak of the major axis was calculated in the range of 1.7 µm to 2.7 µm. In the embodiment, it was confirmed that the first peak of the major axis was always within the range of 1.5 µm or more and 3.0 µm or less regardless of how the cross section was taken. Meanwhile, in the composite material 11 according to the comparative example, the first peak of the major axis was calculated in the range of 1.1 µm to 16.0 µm.

In calculating each of the first peak of the minor axis, the second peak of the minor axis, and the first peak of the major axis, only the second region S2 was extracted by applying binarization using an image analysis software to the images of Figure 1, Figure 9A, and Figure 9B obtained by observation with a scanning electron microscope, and images like Figure 5 were produced. Thereafter, using the analysis function of the aforementioned image analysis software, an inscribed ellipse E was produced for each first region S1, L1 and L2 were calculated, and statistical processing was performed, to calculate the first peak of the minor axis or the like.

The "processing depth" in the table of Figure 12 means, when subjecting the surface of each sample to sandblasting in the same conditions and then measuring the depth of recesses formed on the surface with a gauge, the measurement results expressed in the unit of mm. In the example of Figure 12, three portions in one sample of each of the embodiment and the comparative example are subjected to sandblasting and the processing depth of each portion is measured. The "average processing depth" shown in Figure 12 is an average of the three processing depths. The average processing depth measured for the composite material 10 according to the embodiment was 2.89 mm. The average processing depth measured for the composite material 11 according to the comparative example was 4.83 mm. In this way, the average processing depth of the composite material 10 according to the embodiment is suppressed to small as compared with that of the comparative example, and it was confirmed to be a material that is easier to perform precision processing.

The inventors produced a plurality of types of composite materials 10 while changing the manufacturing conditions separately from the embodiment shown in Figure 1 or the like, and various indices such as the "first peak of the minor axis" were calculated and the average processing depth was measured for each sample. According to the measurement, it was confirmed that, when the first peak of the minor axis like the peak P1 of Figure 7 was within the range of 1.5 µm or less, the average processing depth was reduced, and the processability was sufficiently improved as compared with before. Further, it was confirmed that, when the second peak of the minor axis like the peak P2 of Figure 7 appeared in the graph, and it was within the range of more than 1.5 µm and 2.5 µm or less, the processability was further improved. Furthermore, it was also confirmed that, when the first peak of the major axis like the peak P11 of Figure 8 was within the range of 1.5 µm or more and 3.0 µm or less, the processability was improved more remarkably. The index that the first peak of the major axis is within the range of 1.5 µm or more and 3.0 µm or less can also be used as an index independent of the first peak of the minor axis or the like.

A method for producing the composite material 10 will be described. Hereinafter, the description of matter known as methods for producing SiSiC will be appropriately simplified or omitted.

First, predetermined amounts of carbon powder and silicon carbide powder as raw materials are each weighed, and dispersed and mixed in pure water together with a binder or a dispersant to produce a slurry. The slurry obtained is spray dried using a spray dryer, to produce granulated powder containing carbon and silicon carbide.

At this time, the sphericity of the granulated powder to be obtained can be enhanced by appropriately selecting the binder and the dispersant. The target sphericity value is preferably set to a higher value than the sphericity of granulated powder used in conventional SiSiC materials.

The purpose of increasing the sphericity of the granulated powder is to give the granulated powder sufficient fluidity. It is preferable to increase the fluidity of the granulated powder to an extent that would conventionally be considered excessive. The fluidity of the granulated powder varies depending not only on the sphericity of the granulated powder but also on the size of the granulated powder. Therefore, for example, when spray drying a slurry, it is preferable to control the size of the granulated powder by adjusting the flow rate of the supplied air to obtain the granulated powder with optimal fluidity.

Thereafter, the granulated powder obtained is put into a predetermined mold, and a molded body is obtained by dry uniaxial press molding. The granulated powder is packed sufficiently densely into the mold by increasing the fluidity of the granulated powder in advance as described above. As a result, a molded body with small pore diameters can be obtained.

As a molding method, a method other than the dry uniaxial press molding described above may be used as long as the method can sufficiently densely fill the granulated powder with high fluidity. For example, molding may be performed using CIP (Cold Isostatic Pressing) or may be performed by a method of modeling while spreading powder using a 3D printer.

After the completion of molding, metal silicon is placed on the molded body and fired under reduced pressure. The composite material 10 as shown in Figure 1 or the like can be obtained impregnating the molded body with molten silicon and performing reaction sintering with carbon powder.

In the embodiment, the fluidity of the granulated powder is increased than before, and a molded body is obtained while being sufficiently densely packed in the mold, as described above. As a result, it is considered that, since the reaction between silicon and carbon powder occurs more uniformly throughout the material, a single continuous second region S2 is formed over a relatively wide range as described above, the second region S2 is formed over a relatively wide range, and the first region S1 becomes smaller than before.

When a composite material is formed by the same conventional manufacturing method without sufficiently increasing the fluidity of the granulated powder, a composite material having a cross section similar to that of the comparative example shown in Figure 3A, Figure 3B, Figure 9A and Figure 9B is produced. When the composite material 11 of Figure 3A, Figure 3B, Figure 9A, or Figure 9B is produced, a molded body is produced by casting molding in order to make the difference in structure from the embodiment more noticeable.

Specifically, predetermined amounts of carbon powder and silicon carbide powder were each weighed first, and then dispersed and mixed in pure water together with a binder or a dispersant, to produce a slurry. Thereafter, the slurry obtained was cast into a plaster mold, to obtain a molded body by cast molding. After the completion of molding, metal silicon was placed on the molded body obtained and then fired under reduced pressure.

Hereinbefore, the embodiment has been described above with reference to specific examples. However, the present disclosure is not limited to these specific examples. Design changes made by those skilled in the art as appropriate to these specific examples are also included within the scope of the present disclosure as long as they have the features of the present disclosure. The elements included in each of the specific examples described above, their arrangement, conditions, shapes, and the like are not limited to those illustrated and can be changed as appropriate. The elements included in each of the specific examples described above can be appropriately combined as long as no technical contradiction occurs.

## Claims

1. A composite material (10) comprising silicon and silicon carbide, wherein at least a portion of a cross section (SA) of the composite material cut along a plane comprises:
a first region (S1) comprising the silicon; and
a second region (S2) comprising the silicon carbide that surrounds an entire outer circumference of the first region and that is a continuous single region without grain boundaries interposed.

2. The composite material according to claim 1, wherein an area proportion of the second region in the cross section is 70% or more.

3. The composite material according to claim 2, wherein the area proportion of the second region in the cross section is 80% or more.

4. A composite material (10) comprising silicon and silicon carbide, wherein a cross section (SA) cut along a plane of the composite material comprises:
a plurality of first regions (S1) comprising the silicon; and
a second region (S2) comprising the silicon carbide,
wherein when a graph is plotted that shows a relationship between value L1, which is individually calculated for each of the plurality of first regions contained in the cross section as a length of the minor axis of the maximum ellipse that can be disposed inside the first region, and frequency, the value L1 corresponding to a first peak with the highest frequency in the graph is 1.5 µm or less.

5. The composite material according to claim 4, wherein a second peak with the second highest frequency is present in the graph, in addition to the first peak.

6. The composite material according to claim 5, wherein the value L1 corresponding to the second peak is more than 1.5 µm and 2.5 µm or less.

7. The composite material according to any of claims 4 to 6, wherein when a graph is plotted that shows a relationship between value L2, which is individually calculated for each of the plurality of first regions contained in the cross section as a length of the major axis of the maximum ellipse that can be disposed inside the first region, and frequency, the value L2 corresponding to the first peak with the highest frequency in the graph is 1.5 µm or more and 3.0 µm or less.

8. A composite material (10) comprising silicon and silicon carbide, wherein a cross section (SA) cut along a plane of the composite material comprises:
a plurality of first regions (S1) comprising the silicon; and
a second region (S2) comprising the silicon carbide,
wherein when a graph is plotted that shows a relationship between value L2, which is individually calculated for each of the plurality of first regions contained in the cross section as a length of the major axis of the maximum ellipse that can be disposed inside the first region, and frequency, the value L2 corresponding to a first peak with the highest frequency in the graph is 1.5 µm or more and 3.0 µm or less.
